Europäisches Patentamt

European Patent Office

Office européen des brevets

(11) Publication number: **0 087 973**
**B1**

(12) **EUROPEAN PATENT SPECIFICATION**

(45) Date of publication of patent specification: **10.07.85**

(21) Application number: **83301077.0**

(22) Date of filing: **01.03.83**

(51) Int. Cl.⁴: **G 11 B 7/08, G 11 B 7/12**

(54) **Tracking servo system for optical-disc information reproducing apparatus.**

(30) Priority: **03.03.82 JP 33327/82**

(43) Date of publication of application:
**07.09.83 Bulletin 83/36**

(45) Publication of the grant of the patent:
**10.07.85 Bulletin 85/28**

(84) Designated Contracting States:
**DE FR GB NL**

(56) References cited:
**EP-A-0 021 510**
**EP-A-0 050 967**
**DE-A-2 643 137**
**FR-A-2 339 928**

(73) Proprietor: **Kabushiki Kaisha Toshiba**
**72, Horikawa-cho Saiwai-ku**
**Kawasaki-shi Kanagawa-ken 210 (JP)**

(72) Inventor: **Todokoro, Shigeru c/o Patent Division**
**Tokyo Shibaura Denki K.K. 72, Horikawa-cho**
**Saiwai-ku Kawasaki-shi Kanagawa-ken (JP)**
Inventor: **Nakane, Hiroshi c/o Patent Division**
**Tokyo Shibaura Denki K.K. 72, Horikawa-cho**
**Saiwai-ku Kawasaki-shi Kanagawa-ken (JP)**
Inventor: **Maeda, Satoru c/o Patent Division**
**Tokyo Shibaura Denki K.K. 72, Horikawa-cho**
**Saiwai-ku Kawasaki-shi Kanagawa-ken (JP)**

(74) Representative: **Newstead, Michael John et al**
**Haseltine Lake & Co. 28 Southampton Buildings**
**Chancery Lane**
**London, WC2A 1AT (GB)**

Courier Press, Leamington Spa, England.

## Description

The present invention relates to a tracking servo system for an optical-disc information reproducing apparatus.

In an optical-disc presently in use for a DAD (Digital Audio Disc) player or a video disc player, audio or video information is recorded in optically coded form as a series of recesses or pits formed in each or one information carrying face of the optical-disc and arranged in a spiral track or a plurality of concentric tracks about the centre axis of the optical-disc. The audio or video information thus recorded is reproduced by optically scanning the individual pits along the spiral track or each of the concentric tracks by means of a beam of laser light and thereby detecting the lengths of and spacings between the scanned pits. During playback of such an optical-disc, the optical-disc is driven for rotation about the centre axis thereof usually at a constant linear velocity or a constant angular velocity and the beam of laser light is displaced radially of the optical-disc by a tracking device, or a pick-up unit, forming a part of the DAD player or the video player. The laser beam is directed to a target track and reflected from the information carrying face of the optical-disc or passed through the optical-disc. The beam of light thus reflected or passed through the optical-disc is converted into an electrical signal by means of a photo-electric transducer unit mounted on the pick-up unit for further conversion into an audio or video signal.

In order to reproduce the information recorded on the optical-disc, it is necessary to make the laser beam track precisely the target information track on the optical-disc with high accuracy. To this end, optical-disc information reproducing apparatus has heretofore employed a method wherein a light beam to be exclusively used for the tracking is generated separately from the light beam for the reproduction of the audio or video information signal and a photodetector for detecting the tracking light beam is used for performing tracking control. This method has the disadvantage that the construction of the apparatus becomes complicated. In a case where the use of a single light source is intended, as the employment of a plurality of light sources is expensive, it is necessary to form three light beams for picking up the audio or video signal, for focusing and for tracking respectively. This brings about the disadvantage that the power of the single light source must be made very high.

On the other hand, there has been proposed a method wherein the audio or video information signal, the focusing signal and the tracking signal are taken out with a single light beam. Herein, the photoelectric transducer unit employs plural photodetectors, for example four photodetectors. An image of a pit formed with the aid of the single light beam is converted into respective electric signals by the four photodetectors. Then the respective four signals are converted into three signals carrying audio or video information, focusing information and tracking information respectively. The tracking information carrying signal is produced on the basis of an inconsistency of the electric signals detected by the four photodetectors when the light beam gets out of the target track of the optical-disc.

This method is advantageous in that the apparatus is simple and, since the three information signals are obtained with a single light beam, the light source may be of low power. However, the method has heretofore the following shortage, when it is applied in practice to optical-disc information reproducing apparatus. That is, the track information carrying signal is required to be independent of the other signals, for indicating accurately the location of the target track. The tracking information carrying signal is, however, apt to be distorted by the audio or video signal due to, for example, lack of uniformity of the four photodetectors in their transducing characteristics and/or their relative mechanical arrangement. The distortion of the tracking information carrying signal causes a tracking servo system for controlling the light beam on the target track to operate mistakingly, so that the reproduction of the audio or video signal becomes impossible.

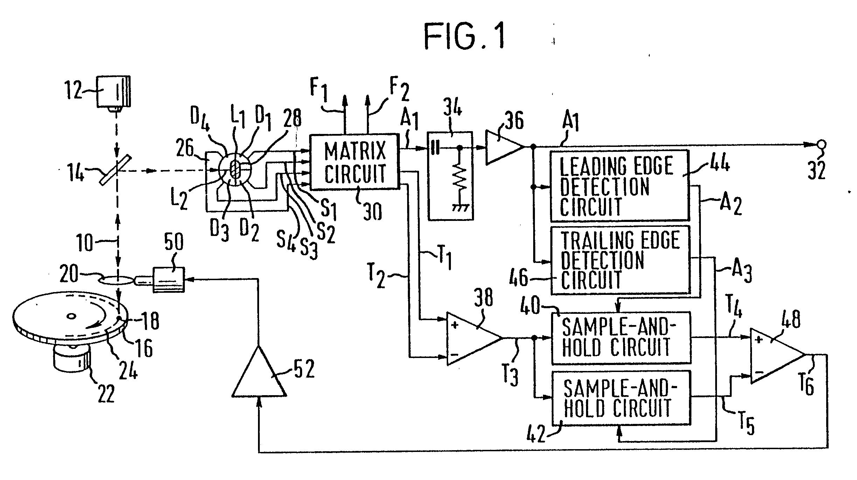

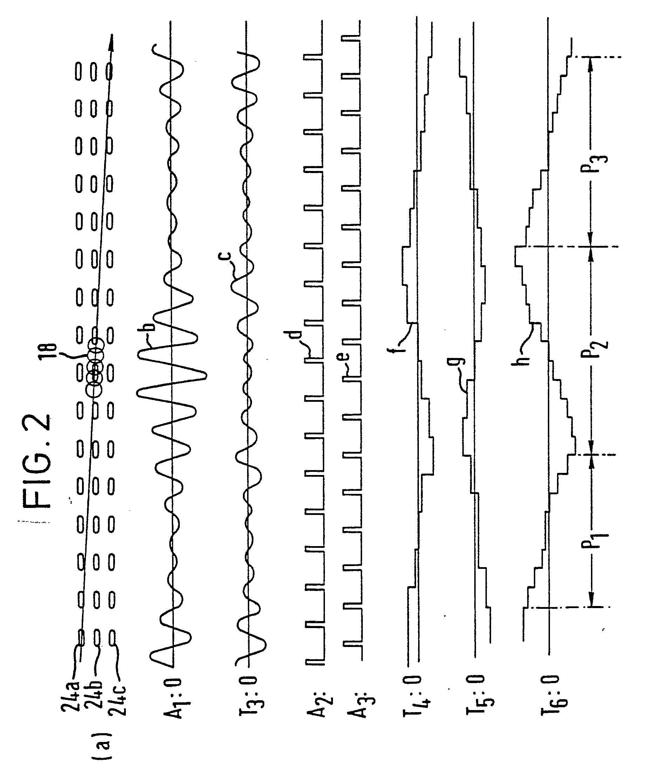

Referring now to Figures 1 and 2, description will be made of a typical prior art apparatus. Figure 1 is a diagram for explaining the tracking servo system in a prior art optical-disc information reproducing apparatus. In the figure, parts which are not relevant to the control of the apparatus are omitted. A single light beam 10 emergent from a laser light source (such as an He-Ne laser) 12 passes through a beam splitter 14. Beam 10 is converted on a point on an optical-disc 16 as a convergent spot 18 by an objective lens 20. Optical-disc 16 is rotated at a constant velocity by a motor 22. On optical-disc 16, information tracks 24 bearing information relating to audio signals or video signals etc. are recorded in a coded form at high density, which information is to be read using convergent spot 18.

At convergent spot 18 of light beam 10, convergent spot 18 receives the information of an information track 24 in the form of changes in the reflection factor of the light due to a series of recesses or pits representing the coded information of the audio or video signal. The reflected light returns to objective lens 20, and it is separated from the entrance beam by beam splitter 14. Then reflected light is guided to a photodetector 26. Light beam 10 having reached photodetector 26 becomes a detected spot bearing image 28 of a pit or recess.

Photodetector 26 is quartered into individual photodetection elements having four regional elements D1, D2, D3 and D4 divided by boundary lines L1 (longitudinal to an image in the tracking direction) and L2 (perpendicular to the image in the tracking direction). Image 28 is placed on or displaced from longitudinal line L1 according to whether light beam 10 traces a target track accurately or inaccurately. Then, individual photodetection elements D1, D2, D3 and D4 respectively output electric signals S1, S2, S3 and S4 varying in accordance with the respective areas of the parts of image 28, overlapping on individual elements D1, D2, D3 and D4. Signals S1, S2, S3 and S4 are matrixed by a matrix circuit 30 and then differently combined into the following five signals, namely an audio or video information carrying signal A1, tracking information carrying signals T1 and T2 and focusing information signals F1 and F2. Signal A1 is formed by addition of all of detection signal S1 to S4. Signal T1 is formed by addition of the two detection signals S1 and S3 from elements D1 and D3 orthogonal to each other and forming a combination disposed obliquely to the track image. Signal T2 is formed by addition of detection signals S2 and S4 from elements D2 and D4 orthogonal to each other and forming another combination intersecting the former combination and disposed obliquely to the track image. Signal F1 is formed by addition of detection signals S1 and S2 from elements D1 and D2 adjacent each other through perpendicular boundary line L2. Signal F2 is formed by addition of detection signals S3 and S4 from elements D3 and D4 adjacent each other through perpendicular boundary line L2. Focusing information carrying signals F1 and F2 are applied to a focusing control section (not shown). Audio or video information carrying signal A1 is applied to an output terminal 32 through a high pass filter (HPF) 34 and an amplifier 36, and is used for the audio or video signal reproduction. Audio or video information carrying signal A1 appearing at output terminal 32 has a waveform b by varying in accordance with light beam 10 moving across tracks 24a, 24b and 24c in order as shown in Figure 2. Respective tracking information carrying signals T1 and T2 are applied to a differential amplifier 38. Output signal T3 of differential amplifier 38 has a waveform c varying as shown in Figure 2 in accordance with the abovementioned movement of light beam 10. Signal T3 is parallelly applied to input terminals of respective sample-and-hold circuits 40 and 42. On the other hand, signal A1 at output terminal 32 is parallelly applied to a leading edge detecting circuit 44 and a trailing edge detecting circuit 46. Output signals A2 and A3 from leading edge detecting circuit 44 and trailing edge detecting circuit 46 respectively have waveforms d and e as shown in Figure 2. Pulses in waveform d appear when positive-going portions of waveform b increase above a reference level, usually ground level. On the other hand, pulses in waveform e appear when negative-going portions of waveform b decrease below the reference level. Signals A2 and A3 thus having pulses representing leading edges and trailing edges of signal A1 are applied to trigger terminals of sample-and-hold circuits 40 and 42 respectively. Accordingly, signal T3 with waveform c is individually sampled by the pulses in respective signals A2 and A3 and held as respective instantaneous sampled levels of signal T3, so that signals T4 and T5 with waveforms f and g appear at output terminals of sample-and-hold circuits 40 and 42 respectively as shown in Figure 2. Signals T4 and T5 are applied to a differential amplifier 48. Output signal T6 from differential amplifier 48 has waveform h, and is used as a tracking error signal. Tracking error signal T6 is applied to a motor 50 through an amplifier 52 for controlling the tracking movement of objective lens 20.

Tracking signal T6 becomes negative or positive when light beam 10 is deviated from target track 24b upwardly or downwardly in the drawing and the absolute value of tracking signal T6 becomes a maximum when light beam 10 is midway between adjacent tracks 24a and 24b or 24b and 24c. Accordingly, motor 50 is able to move objective lens under the control of tracking error signal T6 so that light beam 10 approaches target track 24b from the upper side or the under side of track 24b in the drawing.

The prior art apparatus described above, however, has the following disadvantages. That is, signal T3 at the output terminal of differential amplifier 38 is obtained by operating on electric signals S1 to S4 from four photodetection elements D1 to D4. Signal T3 is distorted in its level when some undesired phenomena occur. For example, a change or fluctuation of strength of light beam 10 influences signal T6; and deformation and/or optical noise in the optical system and an inequality of the four photodetection elements D1 to D4 also cause distortion of signal T3. Such a distortion of signal T3 results in tracking error signal T6 driving motor 50 mistakingly. Further, there are relatively long periods P1 and P3 in which signal T6 gradually decreases. Signal T6 in these periods P1 and P3 is not able to be used for the tracking control of light beam 10 towards target track 24b. Only in period P2 in which signal T6 gradually increases, is signal T6 able to be used for tracking control of light beam 10 towards target track 24b. Thus, the period effective to the tracking control of light beam 10 to target track 24b is restricted. Moreover, because of circuits 40, 42, 44 and 46 for edge detections and sample-and-hold operations being required to have high response characteristics, the apparatus becomes complicated in construction and expensive.

It is, therefore, an object of the present invention to provide an optical-disc information reproducing apparatus for reliably performing tracking control of a light beam to a target track.

Another object of the present invention is to provide an optical-disc information reproducing apparatus in which the effective part of a tracking error signal is long.

A further object of the present invention is to provide an optical-disc information reproducing apparatus which is simple in construction and less expensive.

According to the present invention, there is provided a tracking servo system for an optical-disc information reproducing apparatus in which the information stored by the optical-disc as a series of recesses or pits arranged in the form of substantially parallel extending tracks, concentric with each other or forming a part of a single spiral track, is to be scanned by a light beam, the system comprising: a light source for generating said light beam to scan a target track of the said extending tracks; a pair of photodetecting means aligned along respective lines which intersect each other and disposed in directions oblique to an image of the said target track for use in converting an image of a pit or recess into respective electric tracking signals, the said track image and the said pit or recess image being formed with the aid of the said light beam; means for processing the said tracking signals to provide a tracking error signal; and means for deflecting the said light beam in directions perpendicular to the said target track in response to the tracking error signal so that the said light beam scans the said target track, characterised in that the said processing means includes means for comparing the phases of the said respective electric tracking signals to produce the said tracking error signal, the latter varying in accordance with a phase difference between the said respective tracking signals. A preferable embodiment of the photodetecting means is contained in claim 7.

The present invention will now be described, by way of example, with reference to Figures 3 to 10 of the accompanying drawings, in which:—

Figure 3 is a schematic block diagram showing a circuit arrangement of an optical-disc information reproducing apparatus according to an example of the present invention;

Figure 4 is a block diagram showing in detail a phase comparator of Figure 3;

Figure 5 is a graph showing various waveforms appearing in the circuit arrangement shown in Figure 3 in accordance with a movement of a light beam across three adjacent tracks; and

Figures 6 to 10 are graphs showing various waveforms for explaining tracking operations of the circuit arrangement shown in Figure 3 in various states of photodetection signals.

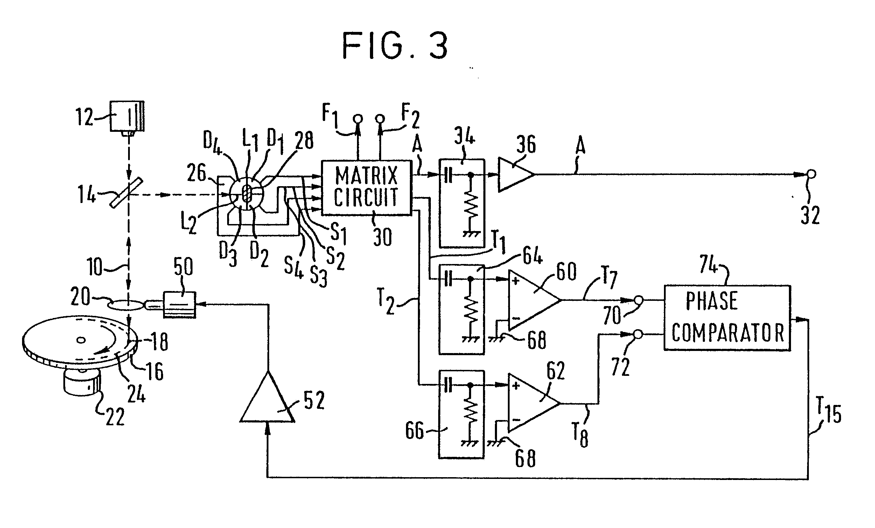

Throughout Figures 3 to 10, elements which are like or equivalent to elements in Figures 1 and 2 are given like reference numerals or letters to the like or equivalent elements in Figures 1 and 2.

Figure 3 schematically shows a block diagram of a fundamental circuit arrangement of an optical disc information reproducing apparatus according to an example of the present invention. The example is an improvement on the arrangement shown in Figure 1. A single light beam 10 emergent from a laser light source 12 passes through a beam splitter 14. Beam 10 is converted to a point on an optical-disc 16 as a convergent spot 18 by an objective lens 20. Optical-disc 16 is rotated at a constant velocity by a motor 22. On optical-disc 16, information tracks 24 bearing information relating to audio signals or video signals etc. are recorded in a coded form at high density, which information is to be read using convergent spot 18.

Convergent spot 18 of light beam 10 receives the information of an information track 24 in the form of changes in the reflection factor of the light due to a series of recesses or pits representing the coded information of the audio or video signal. The reflected light returns to objective lens 20, and it is separated from the entrance beam by beam splitter 14. Then, reflected light is guided to a photodetector 26. Light beam 10 having reached photodetector 26 becomes a detected spot bearing image 28.

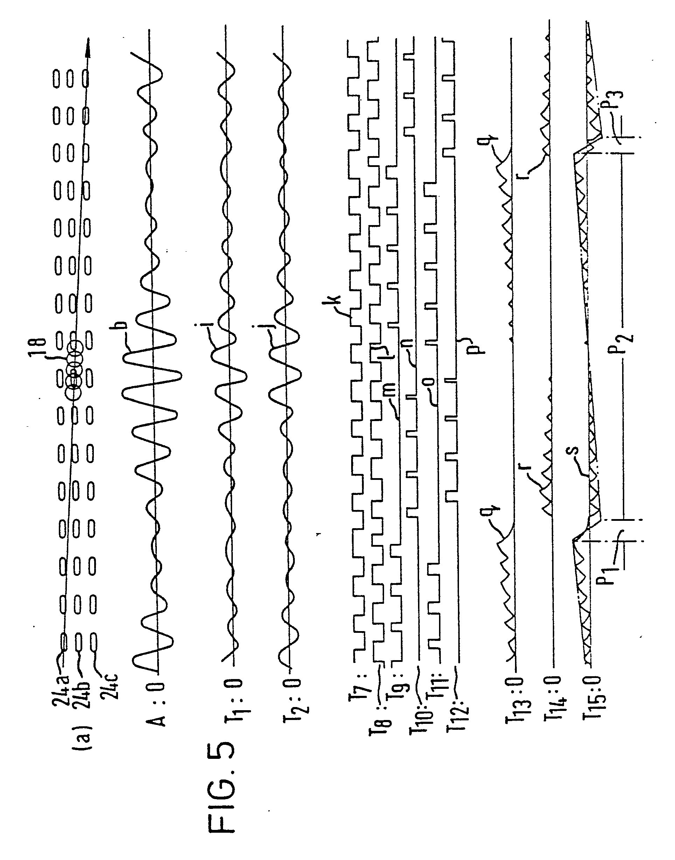

Photodetector 26 is quartered into individual photodetection elements having regional elements D1, D2, D3 and D4 divided by boundary lines L1 (longitudinal to an image in the tracking direction) and L2 (perpendicular to the image in the tracking direction). Image 28 is placed on or displaced from longitudinal line L1 according to whether light beam 10 traces a target track accurately or inaccurately. Then, individual photodetection elements D1, D2, D3 and D4 respectively output electric signals S1, S2, S3 and S4 varying in accordance with the respective areas of the parts of image 28, overlapping on individual elements D1, D2, D3 and D4. Signals S1, S2, S3 and S4 are matrixed by a matrix circuit 30 and then differently combined into the following five signals, namely an audio or video information carrying signal A, tracking information carrying signals T1 and T2 and focusing information carrying signals F1 and F2. Signal A is formed by addition of all of detection signals S1 to S4. Signal T1 is formed by addition of the two detection signals S1 and S3 from elements D1 and D3 orthogonal to each other and forming a combination disposed obliquely to the track image. Signal T2 is formed by addition of detection signals S2 and S4 from elements D2 and D4 orthogonal to each other and forming another combination intersecting the former combination and disposed obliquely to the track image. Signal F1 is formed by addition of detection signals S1 and S2 from elements D1 and D2 adjacent each other through perpendicular boundary line L2. Signal F2 is formed by addition of detection signals S3 and S4 from elements D3 and D4 adjacent each other through perpendicular boundary line L2. Focusing information carrying signals F1 and F2 are applied to a focusing control section (not shown). Audio or video information carrying signal A is applied to an output terminal 32 through an HPF 34 and an amplifier 36, and is used for audio or video signal reproduction. Audio or video information carrying signal A appearing at output terminal 32 has a waveform *b* varying in accordance with light beam 10 moving across tracks 24*a*, 24*b* and 24*c* in order as shown in Figure 5. The part of Figure 3 described hereinbefore is the same as the corresponding part of the prior art apparatus shown in Figure 1.

Tracking information carrying signals T1 and T2 are applied to pulse shaping circuits 60 and 62 respectively through HPFs 64 and 66 respectively. Pulse-shaping circuits 60 and 62 are formed by respective differential amplifiers, whose non-inverting input terminals are connected to matrix circuit 30 for receiving tracking information signals T1 and T2 respectively and whose inverting input terminals are connected to reference potential source 68. Tracking information carrying signals T1 and T2 having waveforms *i* and *j* respectively, varying as shown in Figure 5 in accordance with the movement of light beam 10 across information tracks 24a to 24c, are converted into pulse-shaped signals T7 and T8 respectively, having waveforms *k* and *l* respectively as shown in Figure 5 by pulse-shaping circuits 60 and 62. Signals T7 and T8 appearing at output terminals of pulse-shaping circuit 60 and 62 are applied to input terminals 70 and 72 respectively of a phase comparator 74.

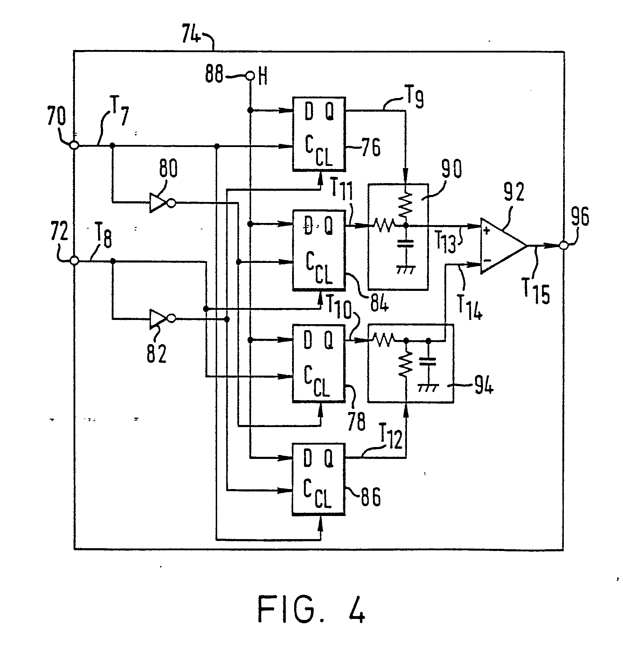

Phase comparator 74 is constructed as shown in detail in Figure 4. Signals T7 and T8 at input terminals 70 and 72 are directly applied to clock terminals C of first and second delayed flip-flops (referred to as d-FFs hereinafter) 76 and 78 respectively. Also, signals T7 and T8 are applied to clear terminals CL of second and first d-FFs 78 and 76 respectively through first and second inverters 80 and 82 respectively; signals T7 and T8 inverted through first and second inverters 80 and 82 are branched and applied to clock terminals C of third and fourth d-FFs 84 and 86 respectively; and signals T7 and T8 at input terminals 70 and 72 are also branched and applied to clear terminals CL of fourth and third d-FFs 86 and 84 respectively, D-terminals of d-FFs 76, 78, 84 and 86 are connected to a high potential source 88 with the level H. In each of the d-FFs 76, 78, 84 and 86, the potential at the respective Q-terminal is set to level H when the potential on the clock terminal C changes to level H while the potential at clear terminal CL is maintained at level H, whereas the potential at each Q-terminal is reset to a low level L when the potential at clear terminal CL changes to level L. Therefore, signals T9, T10, T11 and T12 having waveforms *m, n, o* and *p* respectively varying as shown in Figure 5 in accordance with the relationship between signals T7 and T8 appear at the Q-terminals of first to fourth d-FFs 76, 78, 84 and 86 respectively.

Waveform *m* of signal T9 at the Q-terminal of first d-FF 76 has pulses each beginning at a leading edge of a pulse in waveform *k* of signal T7 and ending at a leading edge of a corresponding pulse in waveform *l* of signal T8. That is, each pulse in waveform *m* of signal T9 represents a phase difference between leading edges of corresponding pulses in waveforms *k* and *l* of signals T7 and T8 when the leading edge of a pulse in waveform *k* of signal T7 is preceding the leading edge of a corresponding pulse in waveform *l* of signal T8. Waveform *n* of signal T10 at the Q-terminal of second d-FF 78 has pulses each beginning at a leading edge of a pulse in waveform *l* of signal T8 and ending at a leading edge of a corresponding pulse in waveform *k* of signal T7. That is, each pulse in waveform *n* of signal T10 represents a phase difference between leading edges of corresponding pulses in waveforms *l* and *k* of signals T8 and T7 when the leading edge of a pulse in waveform *k* is following that of a corresponding pulse in waveform *l*. Waveform *o* of

signal T11 at the Q-terminal of third d-FF 84 has pulses each beginning at a trailing edge of a pulse in waveform *k* of signal T7 and ending at a trailing edge of a corresponding pulse in waveform *l* of signal T8. That is, each pulse in waveform *o* of signal T11 represents a phase difference between the trailing edges of corresponding pulses in waveforms *k* and *l* of signals T7 and T8 when the trailing edge of a pulse in waveform *k* of signal T7 is preceding that of a corresponding pulse in waveform *l* of signal T8. Waveform *p* of signal T12 at the Q-terminal of fourth d-FF 86 has pulses each beginning at a trailing edge of a pulse in waveform *l* of signal T8 and ending at a trailing edge of a corresponding pulse in waveform *k* of signal T7. That is, each pulse in waveform *p* of signal T12 represents a phase difference between the trailing edges of corresponding pulses in waveforms *l* and *k* of signals T8 and T7 when the trailing edge of a pulse in waveform *k* of signal T7 is following that of a corresponding pulse in waveform *l* of signal T8.

Signals T9 and T11 are combined at a first differentiator 90, and then applied to the non-inverting input of a differential amplifier 92. Signals T10 and T12 are combined at a second differentiator 94, and then applied to the inverting input of differential amplifier 92. Signal T13 appearing at the non-inverting input of differential amplifier 92 has waveform *q* varying as shown in Figure 5 in accordance with the movement of light beam 10 across information tracks 24a to 24c. Similarly, signal T14 appearing at the inverting input of differential amplifier 92 has waveform *r* varying as shown in Figure 5 in accordance with the movement of light beam 10 across information tracks 24a to 24c. Resulting from the subtraction between signals T13 and T14, an output signal T15 from differential amplifier 92 has waveform *s* varying as shown in Figure 5 in accordance with the movement of light beam 10 across information tracks 24a to 24c. Signal T15 at an output terminal 96 of phase comparator 74 is applied to a motor 50 through an amplifier 52, and is used for a tracking error signal. Tracking error signal T15 drives motor 50 for controlling objective lens 20 so that light beam 10 traces target track 24b, for example, precisely.

In the above example of the present invention, tracking information carrying signals T1 and T2 respectively from matrix circuit 30 have their amplitude components taken out in being shaped into pulse-shaped waveforms by pulse-shaping circuits 60 and 62. Therefore, signals T7 to T15 respectively are prevented from distortion caused by various undesired phenomena as described in the explanation of the prior art apparatus. Furthermore, as is easily understood from Figure 5, waveform *s* of signal T15 has a long period P2 in which the envelope of waveform *s* of signal T15 gradually increases in accordance with the movement of light beam 10 across information tracks 24a to 24c, and in which the tracking operation of light beam 10 to target track 24b is effectively performed. On the other hand, waveform *s* of signal T15 has very short periods P1 and P3 in which the envelope of waveform s of signal T15 suddenly decreases during the movement of light beam 10 across information tracks 24a to 24c, and in which the tracking operation of light beam 10 to target track 24b is not performed. This means that the effective range of the tracking operation of light beam 10 is very much expanded in comparison with the ineffective range so that the tracking operation of light beam 10 is precisely and quickly performed.

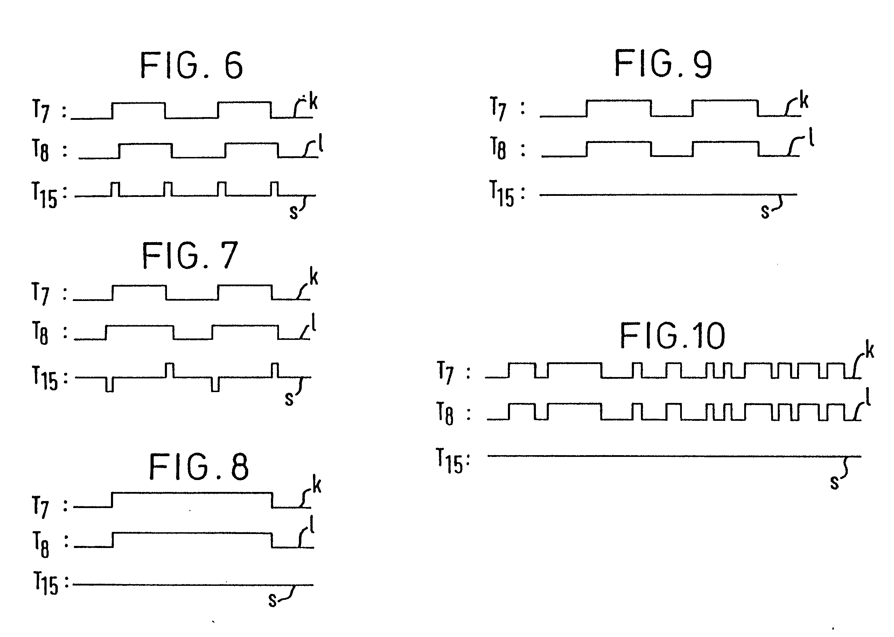

Referring now to Figures 6 to 10, the operation of phase comparator 74 in various states will be described in detail. In these figures, waveform s of tracking error signal T15 is modified to a pulse-shaped signal for simplification of explanation. Figure 6 shows a state in which waveform k of signal T7 is same as that of signal T8 but just follows that of signal T8. In this state, pulses indicating the phase difference between signals T7 and T8 appear twice for one pulse in each waveform k or l. This means that the response characteristic of tracking operation is higher and the sensitivity for displacement of light beam 10 from target track 24b is also improved. Figure 7 shows a state in which both signals T7 and T8 are in phase but the respective duties of the pulses in both waveforms k and l are different. In this state, a negative pulse and a positive pulse appear for one pulse in each waveform k or l. The negative and positive pulses cancel each other so that tracking error signal T15 is prevented from driving motor 50 mistakingly. Figure 8 shows a state in which rates of signals T7 and T8 respectively are, for example, lowered in accordance with a decrease of the rotational speed of optical-disc 16. In this state, signal T15 is maintained at zero level in spite of such a change of the rate of signals T7 and T8. Figure 9 shows a state in which duties of both signals T7 and T8 simultaneously fluctuate. In this state, signal T15 is also maintained at zero level without being influenced by the simultaneous fluctuations of both signals T7 and T8. Figure 10 shows a state in which the coded information signal represented by the series of recesses or pits is a signal modulated by a EFM (Eight-to-Fourteen Modulation) process, so that both waveforms k and l have random components in frequency. In this state, signal T15 is also maintained at zero level in spite of the random frequency components in signals T7 and T8 respectively. As described in relation to Figures 6 to 10, reliability of tracking error signal T15 is precisely kept in various operation states of the apparatus.

**Claims**

1. A tracking servo system for an optical-disc information reproducing apparatus in which the information stored by the optical-disc (16) as a series of recesses or pits arranged in the form of substantially parallel extending tracks (24), concentric with each other or forming a part of a single spiral track, is to be scanned by a light beam (10), the system comprising: a light source (12) for generating said light beam (10) to scan a target track (24b) of the said extending tracks (24); a pair of photodetecting means (D1, D3; and D2, D4) aligned along respective lines which intersect each other and disposed in directions oblique to an image of the said target track (24b) for use in converting an image (28) of a pit or recess into respective electric tracking signals (T1, T2), the said track image and the said pit or recess image (28) being formed with the aid of the said light beam (10); means (64, 66, 60, 62, 74) for processing the said tracking signals (T1, T2) to produce a tracking error signal (T15); and means (52, 50, 20) for deflecting the said light beam (10) in directions perpendicular to the said target track (24b) in response to the tracking error signal (T15) so that the said light beam (10) scans the said target track (24b), characterised in that the said processing means includes means (74) for comparing the phases of the said tracking signals (T1, T2) to produce the said tracking error signal (T15), the latter varying in accordance with a phase difference between the said respective tracking signals (T1, T2).

2. A tracking servo system according to claim 1, characterised in that the said processing means (64, 66, 60, 62, 74) further includes: a pair of pulse shaping means (60, 62) for shaping respective ones of the said respective electric signals (T1, T2).

3. A tracking servo system according to claim 2, characterised in that the comparing means (74) is provided with a pair of phase detection sections (76, 78; and 84, 86) each operative for producing the said tracking error signal (T15), one of the said sections (76, 78) being responsible for the detection of a phase difference between the leading edges of pulses of the pulse-shaped signals and the other of the said sections (84, 86) being responsible for the detection of a phase difference between the trailing edges of said pulses.

4. A tracking servo system according to claim 3, characterised in that each of the said phase detection sections is provided with a pair of phase detectors (76, 78; or 84, 86), one of the phase detectors (76 or 84) performing the said detection when the leading edge or the trailing edge of one of such corresponding pulses precedes the leading edge or the trailing edge of the other of the corresponding pulses, and the other of the phase detectors (78 or 86) performing the said detection when the leading edge or the trailing edge of one of such corresponding pulses follows the leading edge or the trailing edge of the other of the corresponding pulses.

5. A tracking servo system according to claim 4, characterised in that each of the phase detectors is a delayed flip-flop (76 or 78 or 84 or 86) connected at its clock input terminal (C) and at its clear input terminal (CL) to the said photodetecting means (D1, D3; and D2, D4).

6. A tracking servo system according to claim 4 or 5, characterised in that the comparing means (92) includes means for combining signals produced by the phase detectors so that the said tracking error signal (T15) becomes one polarity or another polarity in accordance with the leading edge or trailing edge of a pulse in one of the said pulse shaped-signals (T7) preceding or following the leading edge or trailing edge of a corresponding pulse in the other pulse-shaped signal (T8).

7. A tracking servo system according to any preceding claim, characterised in that each of the photo-detecting means comprises a pair of photodetection elements (D1, D3; or D2, D4) respectively converting respective parts of the said pit or recess image (28) overlapping thereon into electric signals (S1, S3; or S2, S4), the elements of one of the photo-detecting means being aligned orthogonally with the elements of the other photo-detecting means, there being a means (30) for combining the signals (51, 53; or 52, 54) from the elements of each photo-detecting means to produce the tracking signals (T1, T2).

**Patentansprüche**

1. Spurfolge-Servosystem für ein Informationswiedergabegerät mit optischer Scheibe, wobei die Information, die in der optischen Scheibe (16) als eine Reihe von Vertiefungen oder Pits in Form von sich im wesentlichen parallel zueinander erstreckenden Spuren (24) gespeichert ist, die konzentrisch miteinander angeordnet sind oder einen Teil einer einzigen spiralförmigen Spur bilden, durch einen Lichtstrahl (10) abzutasten ist, mit einer Lichtquelle (12) zum Erzeugen des Lichtstrahls (10) zum Abtasten einer Zielspur (24b) der sich erstreckenden Spuren (24), einem Paar von fotoempfindlichen Mitteln (D1, D3; D2, D4), die längs entsprechender Linien ausgerichtet sind, welche einander durchschneiden und in Richtungen angeordnet sind, die schräg zu einem Abbild der Zielspur (24b) zur Benutzung beim Umsetzen eines Abbildes (28) eines Pit oder einer Vertiefung in entsprechende elektrische Spurverfolgungssignale (T1, T2) verlaufen, wobei das Abbild (28) der Spur und das Abbild des Pit oder der Vertiefung mit Hilfe des Lichtstrahls (10) gebildet wird, mit Mitteln (64, 66, 60, 62, 74) zum Verarbeiten der Spurverfolgungssignale (T1, T2) zur Erzeugung eines Spurverfolgungsfehlersignals (T15) und mit Mitteln (52, 50, 20) zum Umlenken des Lichtstrahls (10) in Richtungen senkrecht zu der Zielspur (24b) in Abhängigkeit von dem Spurverfolgungsfehlersignal (T15), so daß der Lichtstrahl (10) die Zielspur (24b) abtastet, dadurch gekennzeichnet, daß die Mittel zum Verarbeiten ein Mittel (74) zum Vergleichen der Phasen der Spurverfolgungssignale (T1, T2) zum Erzeugen des Spurverfolgungsfehlersignals (T15), das sich in Übereinstimmung mit einer Phasendifferenz zwischen den betreffenden Spurverfolgungssignalen (T1, T2) verändert, enthalten.

2. Spurfolge-Servosystem nach Anspruch 1, dadurch gekennzeichnet, daß die Mittel (64, 66, 60, 62, 74) zum Verarbeiten desweiteren ein Paar von Impulsformungsmitteln (60, 62) zum Formen der betreffenden der jeweils entstehenden elektrischen Signale (T1, T2) enthalten.

3. Spurfolge-Servosystem nach Anspruch 2, dadurch gekennzeichnet, daß das Mittel (74) zum Vergleichen mit einem Paar von Phasenerfassungsgliedern (76, 78; 84, 86) versehen ist, wovon jedes zur Erzeugung des Spurverfolgungsfehlersignals (T15) wirksam ist, wobei die einen der Phasenerfassungsglieder (76, 78) für die Erfassung der Phasendifferenz zwischen den Vorderflanken von Impulsen der impulsgeformten Signale und die anderen der Phasenerfassungsglieder (84, 86) für die Erfassung der Phasendifferenz zwischen den Rückflanken der Impulse verantwortlich sind.

4. Spurfolge-Servosystem nach Anspruch 3, dadurch gekennzeichnet, daß jedes der Phasenerfassungsglieder mit einem Paar von Phasendetektoren (76, 78; 84, 86) versehen ist, wobei einer der Phasendetektoren (76 oder 84) die Erfassung durchführt, wenn die Vorderflanke oder die Rückflanke eines der korrespondierenden Impulse der Vorderflanke oder der Rückflanke des anderen der korrespondierenden Impulse voreilt, und der andere der Phasendetektoren (78 oder 86) die Erfassung durchführt, wenn die Vorderflanke oder die Rückflanke des einen der korrespondierenden Impulse der Vorderflanke oder der Rückflanke des anderen der korrespondierenden Impulse nacheilt.

5. Spurfolge-Servosystem nach Anspruch 4, dadurch gekennzeichnet, daß jeder der Phasendetektoren ein verzögertes Flipflop (76 oder 78 oder 84 oder 86) ist, das mit seinem Takteingangsanschluß (C) und seinem Rücksetzsignaleingangsanschluß (CL) mit den fotoempfindlichen Mitteln (D1, D3; D2, D4) verbunden ist.

6. Spurfolge-Servosystem nach Anspruch 4 oder 5, dadurch gekennzeichnet, daß das Mittel (92) zum Vergleichen ein Mittel zum Kombinieren von Signalen enthält, die durch die Phasendetektoren erzeugt werden, so daß das Spurverfolgungsfehlersignal (T15) die eine oder die andere Polarität in Übereinstimmung mit der Vorderflanke oder der Rückflanke eines Impulses in einem der impulsgeformten Signale (T7), die der Vorderflanke oder der Rückflanke eines korrespondierenden Impulses in dem anderen impulsgeformten Signal (T8) voreilt oder nacheilt, annimmt.

7. Spurfolge-Servosystem nach einem der vorhergehenden Ansprüche, dadurch gekennzeichnet, daß jedes der fotoempfindlichen Mittel aus einem Paar von Fotodetektorelementen (D1, D3 oder D2, D4) besteht, die jeweils die betreffenden Teile des Abbildes (28) des Pit oder der Vertiefung, die sich darauf überlappen, in elektrische Signale (S1, S3 oder S2, S4) umsetzen, wobei die Fotodetektorelemente des einen fotoempfindlichen Mittels rechtwinkelig zu den Fotodetektorelementen des anderen fotoempfindlichen Mittels ausgerichtet sind, und daß ein Mittel (30) zum Kombinieren der Signale (S1, S3 oder S2, S4) aus den Fotodetektorelementen jedes der fotoempfindlichen Mittel zum Erzeugen der Spurverfolgungssignale (T1, T2) vorgesehen ist.

## Revendications

1. Un système asservi de suivi de piste pour appareil de reproduction d'information à disque optique dans lequel l'information stockée par le disque optique (16) sous forme d'une série d'évidements ou de creux aménagés sous la forme de pistes (24) s'étendant sensiblement de manière parallèle, concentriques les unes aux autres ou formant une partie d'une unique piste en spirale, doit être balayée par un faisceau de lumière (10), le système comprenant: une source de lumière (12) pour former ledit faisceau de lumière (10) en vue de balayer une piste cible (24*b*) parmi lesdites pistes (24); une paire de moyens photodétecteurs (D1, D3; et D2, D4) alignés le long des lignes respectives qui s'intersectent mutuellement et qui sont disposées dans des directions en oblique par rapport à une image de ladite piste cible (24*b*) pour être utilisés dans la conversion d'une image (28) d'un creux ou d'un évidement en des signaux électriques de suivi de piste respectifs (T1, T2), ladite image de la piste et ladite image (28) du creux ou de l'évidement étant formées à l'aide dudit faisceau de lumière (10); des moyens (64, 66, 60, 62, 74) pour traiter lesdits signaux de suivi de piste (T1, T2) pour obtenir un signal d'erreur de suivi de piste (T15); et des moyens (52, 50, 20) pour infléchir ledit faisceau (10) dans des directions perpendiculaires à ladite piste cible (24*b*) en réponse au signal d'erreur de suivi de piste (T15) de manière qui ledit faisceau de lumière (10) balaye ladite piste cible (24*b*), caractérisé en ce que lesdits moyens de traitement comprennent des moyens (74) pour comparer les phases desdits signaux de suivi de piste (T1, T2) en vue de produire ledit signal d'erreur de suivi de piste (T15), ce dernier variant en fonction d'une différence de phase entre lesdits signaux respectifs de suivi de piste (T1, T2).

2. Un système asservi de suivi de piste selon la revendication 1, caractérisé en ce que lesdits moyens de traitement (64, 66, 60, 62, 74) comprennent en outre: une paire de moyens de mise en forme d'impulsions (60, 62) pour mettre en forme les impulsions respectives desdits signaux électriques respectifs (T1, T2).

3. Un système asservi de suivi de piste selon la revendication 2, caractérisé en ce que les moyens comparateurs (74) présentent une paire de sections de détection de phase (76, 78; et 84, 86), chacune agissant pour produire ledit signal d'erreur de suivi de piste (T15), l'une desdites sections (76, 78) étant responsable de la détection d'une différence de phase entre les bords avant des impulsions des signaux en forme d'impulsions et l'autre desdites sections (84, 86) étant responsable de la détection d'une différence de phase entre les bords arrières desdites impulsions.

4. Un système asservi de suivi de piste selon la revendication 3, caractérisé en ce que chacune desdites sections de détection de phase présente une paire de détecteurs de phase (76, 78; ou 84, 86), l'un des détecteurs de phase (76 ou 84) effectuant ladite détection quand le bord avant ou le bord arrière de l'une desdites impulsions correspondantes précède le bord avant ou le bord arrière de l'autre des impulsions correspondantes, et l'autre des détecteurs de phase (78 ou 86) effectuant ladite détection quand le bord avant ou le bord arrière de l'une desdites impulsions correspondantes suit le bord avant ou le bord arrière de l'autre des impulsions correspondantes.

5. Un système asservi de suivi de piste selon la revendication 4, caractérisé en ce que chacun des détecteurs de phase est une bascule à retard (76 ou 78 ou 84 ou 86) reliée par sa borne d'entrée d'horloge (C) et par sa borne de remise à l'état initial (CL) auxdits moyens photodétecteurs (D1, D3; et D2, D4).

6. Un système asservi de suivi de piste selon la revendication 4 ou 5, caractérisé en ce que les moyens comparateurs (92) comprennent des moyens pour combiner les signaux produits par les détecteurs de phase de manière que ledit signal d'erreur de suivi de piste (T15) passe à une polarité ou à une autre polarité selon que le bord avant ou le bord arrière d'une impulsion de l'un desdits signaux en forme d'impulsions (T7) précède ou suit le bord avant ou le bord arrière d'une impulsion correspondante de l'autre signal en forme d'impulsions (T8).

7. Un système asservi de suivi de piste selon l'une quelconque des revendications précédentes, caractérisé en ce que chacun desdits moyens photodétecteurs comprend une paire d'éléments de photodétection (D1, D3; ou D2, D4) convertissant respectivement les parties respectives de ladite image de creux ou d'évidement (28) qui la chevauche en signaux électriques (S1, S3; ou S2, S4), les éléments de l'un des moyens photodétecteurs étant alignés orthogonalement avec les éléments de l'autre moyen photodétecteur, un moyen (30) étant prévu pour combiner les signaux (51, 53; ou 52, 54) provenant des éléments de chaque moyen photodétecteur pour produire les signaux de suivi de piste (T1, T2).

# FIG.1

0 087 973

FIG. 2

FIG. 3

FIG. 4

0 087 973

FIG. 5

(a)

24a
24b
24c

18

A : 0    b

T₁ : 0    i

T₂ : 0    j

T₇ :    k
T₈ :
T₉ :    m    l
T₁₀:    n
T₁₁:    o
T₁₂:    p

T₁₃ : 0    q    q

T₁₄ : 0    r    r

T₁₅ : 0    s

P₁    P₂    P₃

FIG. 6

FIG. 7

FIG. 8

FIG. 9

FIG.10

0 087 973